# EUROPEAN PATENT SPECIFICATION

(11) **EP 1 421 542 B1**
(45) Date of publication and mention of the grant of the patent: **11.07.2007**
(21) Application number: 02755385.8
(22) Date of filing: 09.08.2002
(51) Int. Cl.: G06K 9/00, G07C 9/00, H04L 9/32

(54) **ELECTRONIC WRITING DEVICE AND METHOD FOR GENERATING AN ELECTRONIC SIGNATURE**
ELEKTRONISCHES SCHREIBGERÄT UND VERFAHREN ZUR ERZEUGUNG EINER ELEKTRONISCHEN SIGNATUR
DISPOSITIF D'ECRITURE ELECTRONIQUE ET PROCEDE PERMETTANT DE GENERER UNE SIGNATURE ELECTRONIQUE

(30) Priority: 17.08.2001 HU 0103350
(43) Date of publication of application: 26.05.2004
(73) Proprietor: Ladànyi, Péter, 1148 Budapest (HU); Màthé, Jozsef, 2143 Kistarcsa (HU); Nagy, Tamas, 1033 Budapest (HU); Patko, Tamas, 2094 Nagykovacsi (HU)
(72) Inventor: Ladànyi, Péter, 1148 Budapest (HU); Màthé, Jozsef, 2143 Kistarcsa (HU); Nagy, Tamas, 1033 Budapest (HU); Patko, Tamas, 2094 Nagykovacsi (HU)
(74) Representative: Kereszty, Marcell
(86) International application number: PCT/HU2002/000078
(87) International publication number: WO 2003/017185

(56) References cited:
- EP-A- 0 598 236
- EP-A- 1 030 282
- WO-A-02/23796
- WO-A-99/33221
- WO-A-99/57846
- DE-A- 10 019 679
- US-A- 5 680 460
- US-A- 6 064 751
- NARAYANASWAMY S.; JIANYING HU; KASHI R.: 'User interface for a PCS smart phone' MULTIMEDIA COMPUTING AND SYSTEMS vol. 1, 07 June 1999, LOS ALAMITOS, CA, USA, IEEE COMPUT. SOC, US, pages 777 - 781, XP010342800
- PLAMONDON R.; SRIHARI S.N.: 'ON LINE-AND OFF-LINE HANDWRITING RECOGNITION: A COMPREHENSIVE SURVEY' IEEE TRANSACTIONS ON PATTERN ANALYSIS AND MACHINE INTELLIGENCE vol. 22, no. 1, January 2000, IEEE SERVICE CENTER, LOS ALAMITOS, CA, US, pages 63 - 84, XP000936790

## Description

### TECHNICAL FIELD

The present invention relates to an electronic writing device for generating an electronic signature, which device enables the identification of a user by inspecting the user's signature as a biometric parameter. Furthermore, the invention relates to a method for generating an electronic signature by the electronic writing device.

### BACKGROUND ART

The development of the information society - with special regard to electronic business transactions and electronic public administration - made it inevitable to elaborate and introduce a process that provides an opportunity for making authentic electronic statements and data-transmission. A solution to do so is provided by the so-called electronic signature.

An electronic signature has to meet the same requirements as a conventional paper based signature (hereinafter signature):
- only one person is able to create a signature characterizing him/her, consequently the signature cannot be forged or disowned;
- the signature can be made and verified easily;
- if a signatory acts under compulsion, he/she can sabotage the signature in a way which cannot be detected by the person imposing the compulsion;
- the signed document can not be modified undetectably after signing.

The method of electronic signature is based on the principle of Public Key Infrastructure (PKI) elaborated by several international standards organizations. The UN organization UNCITRAL described the related information in its document published under the title Model Law on Electronic Signatures with Guide to Enactment (2001, United Nations, New York, 2002 United Nations Publication Sales No. E.02.V.8 ISBN 92-1-133653-8).

The essence of Public Key Infrastructure is an encrypting method, in which two different keys are required for coding and decoding a message. These keys represent a supplementing pair, and yet it is practically impossible to derive a private key from the public key. A person signing an electronic document must have a private key not known to others as well as a public key. The signatory 'signs' the electronic document with his/her own private key by generating first a hash of the electronic document by means of an algorithm, an encoding algorithm encodes this hash by means of the private key, and the data series so generated is the electronic signature. The signatory sends the electronic document together with the electronic signature to the receiving party, which also makes a hash of the document, using the same method as the signatory. By means of the public key, the receiving party decodes another hash from the electronic signature. The two matching hashes indicate the authenticity of the electronic document.

The description above shows that an electronic signature is bound to a document logically and not physically, and yet if a document is altered after signing, the hash will not be identical with the hash that can be decoded from the electronic signature, consequently the signature will not be authentic.

Currently, the private key required for an electronic signature is mostly stored in a chip card, which is able to carry out the required coding activities as well. The possibility of causing damage by theft or any opportunities for abuse can be reduced by means of a password or PIN code in a way that the card would not generate a signature until enabled by an appropriate password. In this case the identification of the user is performed in a combined way on the basis of an asset (card) and knowledge (PIN code), but even so it cannot be guaranteed that it is the proper person who makes use of the card. Practice unfortunately proves that in many cases the users are misled, and they unsuspectingly or unknowingly disclose secret particulars like their signature key, password or PIN code.

To eliminate these disadvantages, a requirement has emerged to generate the electronic signature through the application of a biometric identification method instead of the 'asset' and 'knowledge' factors.

it is known from the prior art that a signature in the conventional sense is a biometric parameter of the signatory, which parameter is suitable for such identification. By measuring dynamic parameters of a signature, like the change in time of the pen's tilting angle, the change in time of the pressure between the writing surface and the pen, the change in time of the pen's position, the line-drawing velocity, acceleration and twisting etc., a so-called dynamic signature detection can be carried out, by which appropriate biometric identification can be obtained. An electronic writing device/writing surface unit and a method are described for such identification for example in WO 98/12661. This known unit and method, however, are only suitable for identifying the user and fail to enable the generation of a digital signature in a simple and efficient way. A further disadvantage of this known approach is that an electronic unit comprising a special writing surface is necessary for identification, and this does not enable the creation of a simple, portable and widely applicable system.

Furthermore, in US 5 892 824 a method and an apparatus is described for reading in the pattern of a conventional signature on a special sensing writing surface, in addition to enabling identification based thereon. This known approach also has the disadvantages mentioned above.

In WO 99/33221 a digital signing device and a method for generating and supplying a digital signature are disclosed. According to this known method, for encrypting, the hash a private key stored in a smart card is used, the latter being attached to a smart card reader of a computer. The encrypting is carried out on the basis of an enabling procedure, in which - optionally - biometric information can be used for authentication. Examples of optional biometric data are hash of a fingerprint, voiceprint, retina scan or face scan. This document represents the general prior art of electronic signature generation, and provides a system which is less flexible and which requires costly special devices, such as smart card, reader and biomertic scanner. However, the main disadvantage of this system is that the personal device, i.e. the smart card itself is not capable of verifying the user.

In EP 1 030 282 A1 a digital signature generating server and method are disclosed, wherein dynamic signature verification is used as biometric data for enabling encryption. This known system and method do not provide a portable private device storing all private data necessary for generating a digital signature. On the contrary, in this known system the private keys of users are stored in a common database of a network server, which makes these systems less safe and vulnerable against unauthorized access.

In DE 100 19 679 A1 an electronic writing device and a method are disclosed for authorizing financial transactions. The known writing device comprises means for validating a dynamic signature and means for carrying out authorizing data transfers with a master station on the basis of the validation. Examples of authorizing data transfers are transferring the detected digital signature to the master station and transferring access codes for financial transactions to the master station. It is a disadvantage that electronic signatures as described above can not be generated with this known device having no stored private key and encrypting functions. It is a further disadvantage that private information, such as the detected dynamic signature and , access codes are transmitted to an external system which is detrimental to safety and makes the system vulnerable against unauthorized access.

### DISCLOSURE OF INVENTION

It is an object of the invention to provide an electronic writing device and a method which enable generating an electronic signature based on a normal signature in a simple, safe, efficient and widely usable way.

The basic idea of our invention is the following. By detecting and identifying in an electronic writing device a manual signature as a biometric parameter of a user, an electronic signature can be created in the same writing device subject to the identification, thereby obtaining a system which is simple, efficient and can be used widely. If the biometric parameter is the signature itself, and, instead of a chip card as in the prior art, the private key is included in the electronic writing device suitable for recognizing the signature, the impersonality of the electronic signature can be eliminated, because making an electronic signature will require the same series of motions as a normal signature.

Consequently, according to a first aspect, the invention is an electronic writing device for creating an electronic signature, the device comprising a sensor for producing an output signal by detecting a dynamic parameter of a signature, and means for calculating a detected signature pattern on the basis of the output signal of the sensor, comparing the detected signature pattern with a signature pattern stored in a memory and generating an enabling signal on the basis of the comparison, wherein the device also comprises a communication unit for implementing communication with a host system on the basis of the enabling signal. The device comprises a private key for the electronic signature and means for generating the electronic signature by means of the private key, wherein the communication unit is capable of receiving a hash produced from a document in the host system and supplying to the host system the electronic signature generated by means of the private key from the hash. The device further comprises a force-associated signature pattern corresponding to a signature under compulsion and a force-associated private key for an electronic signature implying compulsion, wherein the electronic signature is generated by the force-associated private key when a force-associated signature pattern is detected. The stored signature pattern in the writing device is adjusted by self-learning during use.

The dynamic parameters of the signature, for example a change in time of the tilting angle of the writing device, a change in time of the pressure between the writing surface and the writing device, a change in time of the position of the writing device, as well as the line-drawing velocity, acceleration and twisting represent biometric data, on the basis of which one or more of these factors can be excellently used to ensure identification necessary for generating the electronic signature. Producing an electronic signature in the writing device and providing the necessary communication according to the invention afford simple, efficient and flexible opportunities for applying an electronic signature and for its wide-ranging proliferation within a very short time.

According to a second aspect, the invention is a method for generating an electronic signature by means of an electronic writing device, comprising the steps of detecting a dynamic parameter of a signature and on the basis of the detection calculating a detected signature pattern, comparing the detected signature pattern with a signature pattern stored in the writing device and producing an enabling signal on the basis of the result of the comparison. The method further comprises the steps of generating a hash in a host system from a document to be signed electronically, supplying the hash to the writing device, the writing device comprising a private key, generating the electronic signature by means of the private key in the writing device from the hash, and transferring the electronic signature from the writing device to the host system for further processing, wherein at least one of the supplying, generating or transferring steps is carried out depending on the enabling signal. The writing device further comprises a force-associated signature pattern corresponding to a signature under compulsion, and a force-associated private key associated with an electronic signature implying compulsion, the electronic signature being generated by the force-associated private key when the force-associated signature pattern is detected. The stored signature pattern in the writing device is adjusted by self-learning during use.

By means of the method according to the invention, the electronic writing device can be applied simply and efficiently.

### BRIEF DESCRIPTION OF DRAWINGS

The invention will hereinafter be described on the basis of preferred embodiments depicted by the drawings, where
Fig. 1 is a schematic diagram of a writing device according to the invention,
Fg. 2 is a detailed schematic diagram of the writing device shown in Fig. 1,
Fig. 3 is a schematic cross sectional structural view of the writing device shown in Fig. 2,
Fig. 4 is a schematic view of the writing device shown in Fig. 3 and placed into a holding module,
Fig. 5 is a diagram depicting the steps related to an electronic signature,
Fig. 6A is a simplified flow diagram of digitizing a signature,
Fig. 6B is a simplified flow diagram of communication related to an electronic signature,
Fig. 6C is a simplified flow diagram of communication related to a force-associated electronic signature and
Fig. 7 is a flow diagram of the program operating in the writing device.

### MODES FOR CARRYING OUT THE INVENTION

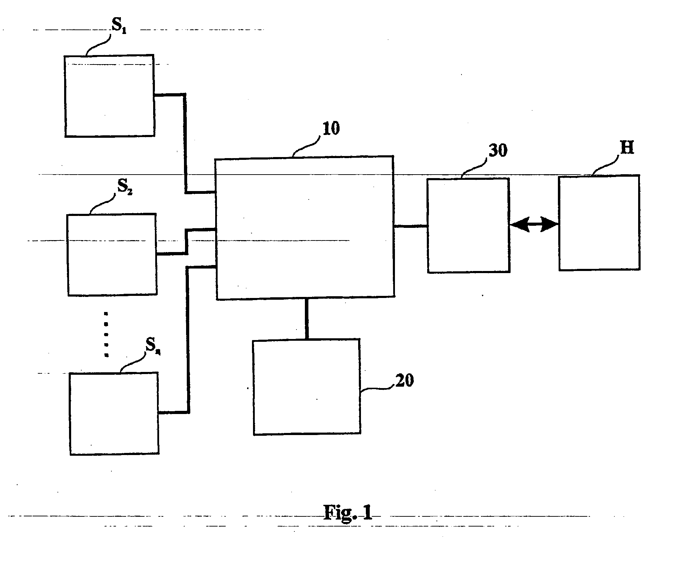

An example of the general design of a preferred embodiment of the writing device according to the invention is shown in Fig. 1. The writing device comprises sensors S₁, S₂, ... Sₙ which detect for example the tilting of the writing device, and/or the pressure between a tip of the writing device and a paper and/or the line-drawing of the writing device. Output signals of the sensors S₁, S₂, ... Sₙ are connected to a central unit 10, which collects data during the writing of the signature with the writing device from the sensors S₁, S₂, ... Sₙ, i.e. it takes samples from the analog signals provided by these sensors. From the data series so obtained, the central unit 10 calculates in a way known per se a detected signature pattern. The signature pattern can be calculated with any appropriate mathematical transformation from the data series. Under signature pattern, data obtained by such a transformation is to be understood which allows comparison. The producing or calculating of the detected signature pattern from the detected data series can be carried out for example in a way described in WO 98/12661. Next, the central unit 10 compares the detected signature pattern with one or more signature patterns stored in a memory unit 20.

In the course of comparison, in a way known per se, the central unit 10 determines according to conditions given by the signature identification algorithm whether the detected signature is authentic. If it is, the central unit 10 generates an enabling signal, on the basis of which through a communication unit 30 it signals to an external host system H that is ready to receive data. The host system H could be for example a computer system or unit, a telecommunication system or unit, and furthermore any appropriate microprocessor based system or unit. In this case the host system H sends a data flow, for-example the-electronic hash of an electronic document or file to the central unit 10 via the communication unit 30. Next, the central unit 10 encodes the data flow by means of a private key stored in the memory unit 20, and the code series so generated is the electronic signature. Finally, via the communication unit 30, the central unit 10 transfers the electronic signature to the host system H.

If a signature does not prove to be authentic, no enabling signal is issued, and no data exchange is implemented between the host system H and the electronic writing device. In a manner known per se, the algorithms of the central unit 10 follow a slow change of the user's signature in the signature patterns stored in the memory unit 20.

Hence, on the basis of the discussion above, the central unit 10 comprises means for calculating a detected signature pattern on the basis of the output signals of the sensors S₁, S₂, ... Sₙ, comparing the detected signature pattern with a signature pattern stored in the memory unit 20 and generating an enabling signal based on the comparison, as well as means for generating the electronic signature by means of the private key. These means can be implemented preferably as one or more program modules in the central unit 10, but of course they may also be implemented according to the invention on a hardware basis or as program modules running in separate hardware units.

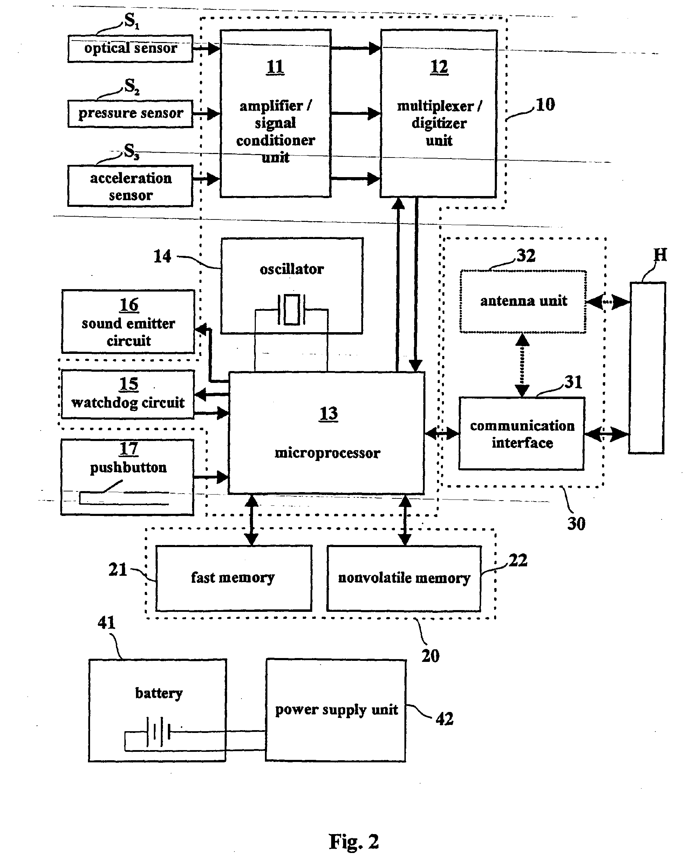

Fig. 2 shows a possible preferred embodiment of the hardware of the electronic writing device according to the invention.

The function of the optical sensor S₁ is to trace the movements of a pen tip of the writing device on a writing surface, e.g. on paper. By using the optical sensor S₁, a two-dimensional displacement-time function is obtained. This is a classical element of signature identification, which element can be preferably implemented by optical sensors used in optical mice. Most preferably, the sensor described in US 6 256 016 B1 can be used, because by using this sensor, the position of the pen tip of the writing device can be traced on the writing surface until the writing device is removed from the writing surface. Of course, in this case it cannot be guaranteed that an accurate tracing will be available for the positioning of commas, dots and underlining, but this is not necessarily part of the detected signature pattern.

The pressure sensor S₂ serves for detecting the pressure characterizing the signatory and changing dynamically between the pen tip and the writing surface during the writing of the signature. By means of this sensor, a pressure-time function is generated during signing. The pressure sensor S₂ can be preferably implemented by means of an inductive sensor, for which an example is described in US 5 565 632.

The acceleration sensor S₃ is used for detecting the acceleration of the pen tip along the three orthogonal axes. This parameter is also specific and characterizes the signatory. The result provided by the acceleration sensor S₃ is a three dimensional acceleration-time function. An example for applying such a sensor is described in WO 98/12661.

The output signals of the sensors S₁, S₂ and S₃ must be amplified and eventually conditioned so that they are optimally matched to the input range of a multiplexer/digitizer unit 12. This function is performed by an amplifier/signal conditioner unit 11.

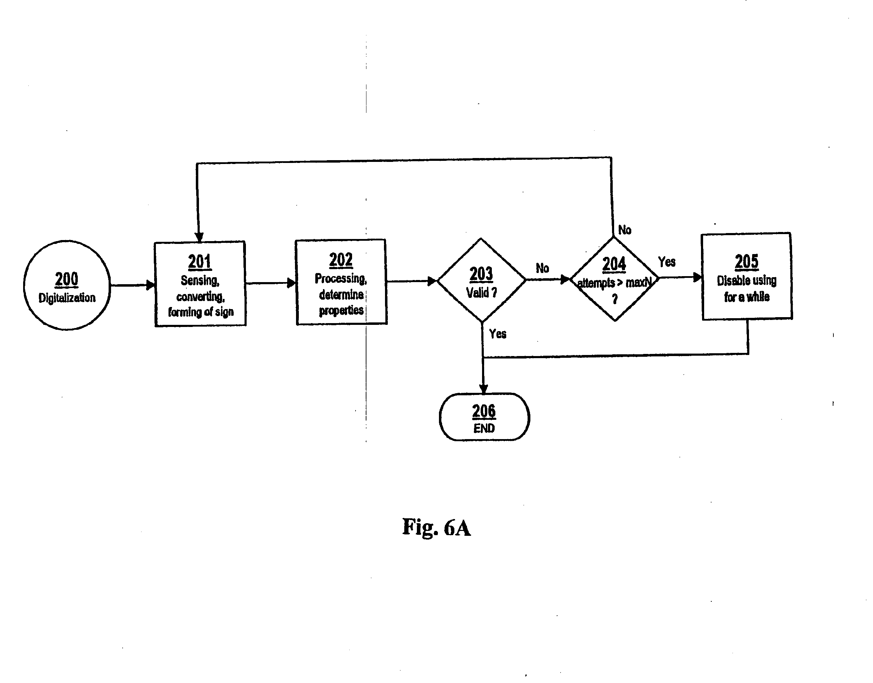

From here, the analog signals are supplied to the multiplexer/digitizer unit 12. Controlled by a microprocessor 13, the multiplexer directs one of the analog signals to the digitizer unit, which - again controlled by microprocessor 13 - performs the digitizing of the analog signals. The digitized signals so obtained are supplied to microprocessor 13. The digital signals are not yet identical with the digital signature pattern; this will be discussed in connection with Fig. 6A.

Preferably, the microprocessor 13 can be a low consumption and appropriately fast microcontroller having ISP (In-System Programming) characteristics, with a program memory that can be protected against read-out, and having a parallel address and data bus in order to ensure fast memory access, for example the product P89C51 RD2 of Philips Semiconductors, with an oscillator circuit 14 that runs with a maximum clock frequency. Since it is advisable to load the private key together with the software of the writing device, it is advisable to store the private key in the program memory protected against read-out.

A reset signal required for the microprocessor 13 is supplied by a watchdog circuit 15. A further important function of this circuit is that it compares the supply voltage on an ongoing basis with an internal reference value. If the supply voltage is low, the 13 microprocessor is set to a reset status, consequently it is unable to perform a non-defined operation in the memories under the condition of an uncertain supply voltage value. The third function of the watchdog circuit 15 is to ensure restarting of the software by issuing a reset pulse, in the case of an undesired freezing of the software of microprocessor 13. The product SIPEX SP691 can be used for example as the watchdog circuit 15.

Preferably, a sound emitter circuit 16 is also connected to the microprocessor 13, and the function of this circuit is to emit various sound signals in the case of various functional operations of the writing device. The sound emitter circuit 16 is controlled by the microprocessor 13 and it is preferably designed as a small size piezo buzzer.

Furthermore, a pushbutton 17 is connected to the microprocessor 13, by which instructions can be given to the writing device in various phases of the operation, in a way described below.

The microprocessor 13 is associated with two types of memory with parallel address and data buses. A fast memory 21 having a faster access and preferably designed as a fast SRAM can be used for the temporary storage of digitized signals, for the temporary storage of the results of calculations carried out with the digitized signals, and hence for that of the detected signature pattern, and also for the temporary storage of calculated values generated in the course of comparing the stored signature patterns and the currently calculated detected signature pattern. The data stored here are all temporary, and they are deleted when the device is switched off.

There is provided a non-volatile memory 22, which is slower, but also has a parallel access, for storing the signature patterns. Of course, microprocessor 13 must be able to write and read this memory, therefore it is advisable to use a FLASH or EEPROM memory.

The communication unit 30 establishes the connection between the writing device and the host system H. The communication unit 30 comprises a communication interface 31 and in the given case an antenna unit 32. It is advisable to use a standard communication interface 31, which is available in current computers, i.e. for example:
- USB 2.0 cable connection, about which more detailed information is available on the home page www.usb.org,
- infrared 9.6 to 115 kbps connection corresponding to the IrDA 1.0 recommendation, about which more detailed information is available on home page www.irda.org or
- Bluetooth V 1.1 radiofrequency connection corresponding to IEEE 802.11, about which more detailed information can be found on home page www.bluetooth.org.

The antenna unit 32 is optionally needed if radiofrequency transmission is used. In the case of Bluetooth, it is advisable to use Phycomp's extremely small size antennas which, however, have a high factor of quality.

The power supply of the writing device is provided by a battery 41 and by a power supply unit 42.

Because of the small space available for the components and in order to secure the protection of signature patterns against read-out, it is advantageous to integrate the circuits as much as possible. Hence, preferably the following may be designed in a single integrated circuit: the microprocessor 13, the watchdog circuit 15, the fast memory 21, the non-volatile memory 22, the-communication interface 31 and the multiplexer/digitizer unit 12. Of course this is only advantageous in the case of large production volumes.

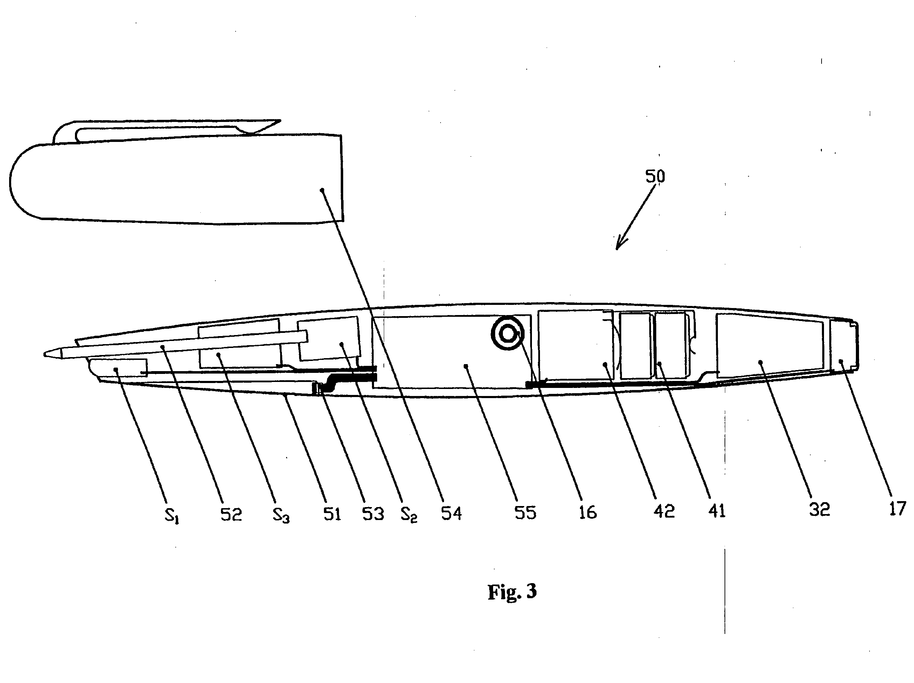

Fig. 3 shows a preferred internal design of a writing device 50 according to the invention and designed as an electronic pen. A pen refill 52 is situated in a casing 51 of the writing device 50, with the optical sensor S₁ immediately behind the refill 52. Thanks to the refill 52, the user generates by means of the writing device 50 a conventional paper-based signature as well in addition to the electronic signature. The pressure sensor S₂ is located at the inner end of the refill 52, in a way that the end of the refill 52 is located in the pressure sensor S₂. The acceleration sensor S₃ is to be positioned as close as possible to the tip of the refill 52. In the writing device 50, a unit 55 comprises the central unit 10, the memory unit 20 and the communication unit 30. The other components are linked by cables to the unit 55. The power supply unit 42 has a direct connection with the battery 41. The optional antenna unit 32 and the pushbutton 17 are connected by respective cables to the unit 55. Furthermore, the writing device 50 comprises a connector 53, which enables cable communication and is also suitable for charging the battery. Preferably, the connector 53 is in the part protected by a cap 54 fitted on the casing 51 of the writing device 50.

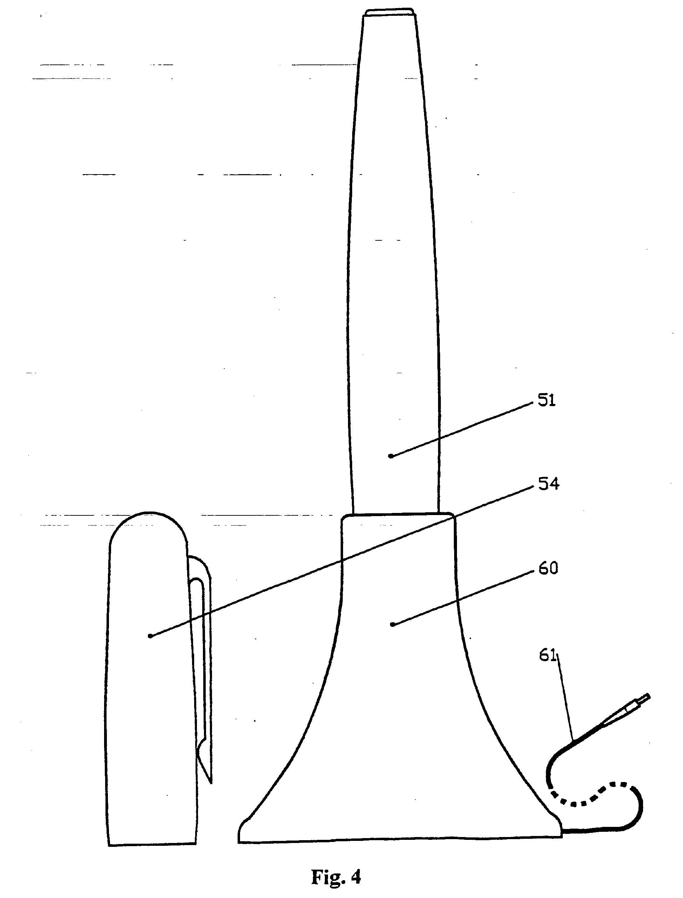

If a cable link were used for connection to the host system H, it would not be advantageous if - while writing the signature - the cable hindered the movement of the writing device 50. To avoid this, a holding module 60, i.e. a so-called docking station has been designed for the writing device 50. The same holding module 60 serves for charging the battery used in the given case. The holding module 60 is shown in Fig. 4. The cap 54 is not required when using the holding module 60, because the connector 53 of the writing device 50 must be accessible. For example, the holding module 60 is connected by a USB cable 61 to the host system H. The casing 51 of the writing device 50 and the inside of the holding module 60 are preferably designed in a way that the insertion of the writing device 50 is simple and unambiguous.

In the case of a cable connection, the method of using the writing device 50 is for example the following when creating an electronic signature:
- The writing device 50 is removed from the holding module 60.
- The writing device 50 is switched on and then the electronic signature function is selected.
- The signature is written, and if it is identifiable, the writing device 50 indicates by a sound signal that it has been accepted.
- The writing device 50 is returned to the holding module 60.
- The writing device 50 issues an enabling signal and the communication between the writing device 50 and the host system H is established via the cable 61 of the holding module 60: the host system H sends a hash, which is encoded by the writing device 50 and the electronic signature so produced is returned to the host system H.

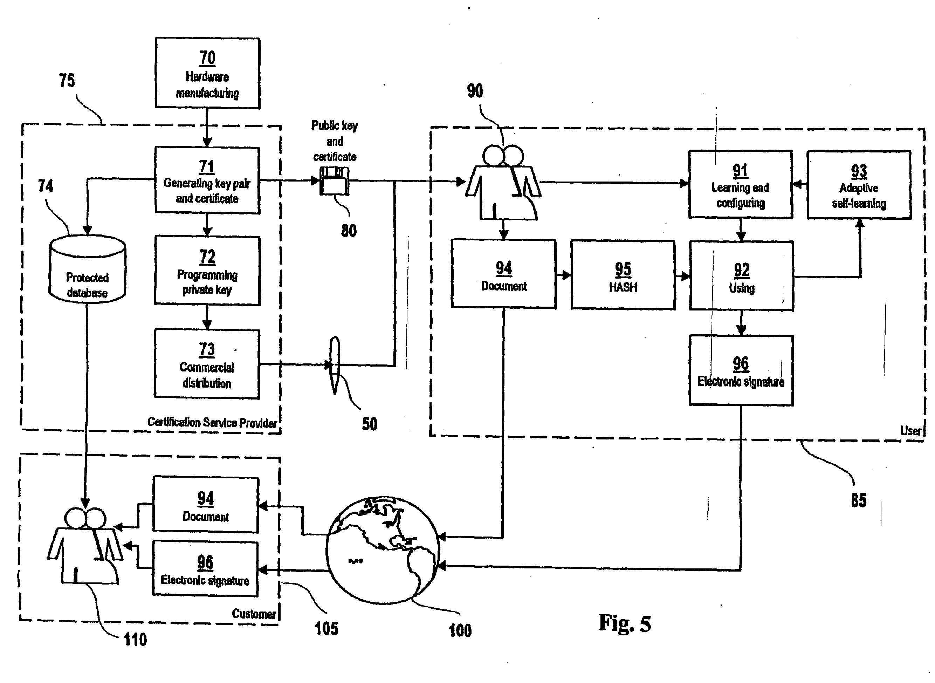

Fig. 5 depicts the steps related to the electronic signature.

Physically, the writing device 50 is made during the hardware manufacturing implemented in step 70, but at that time no program, private key or algorithm is included.

The task of a certification service provider 75 indispensable for operating the electronic signature system is the generating of key pairs and certificates in step 71, their storage in a protected database 74, and the downloading of the private key and private algorithms - practically the writing device software itself - into the blank writing device 50 in step 72, followed by commercial distribution in step 73.

A user 90 purchases the electronic writing device 50 suitable for creating the electronic signature and in an electronic form (e.g. via the Internet) he/she may have access to his/her public key 80 or to that of other users and also to the certificates of electronic signatures.

The user 90 may basically use the writing device 50 according to the invention in two modes in the frames of various user activities 85:
- In step 91 of training and configuration, the user 90 can store the signature patterns in the writing device 50. The training process consists of several steps 92 of signing with the writing device 50 and steps 93 of adaptive self-learning.
- When signing electronic documents, an appropriate algorithm known per se provides a hash 95 of the prepared document 94 in the host system H, and then by using the writing device 50 the physical signature is written. If the signature was appropriate, the hash 95 received from the host system H is encoded by the writing device 50 by means of the private key into an electronic signature 96, and the electronic signature 96 is sent back to the host system H. Again in this case, the writing device 50 follows slight changes in the signature of the user 90 and adaptive self-learning activities are performed in step 93. The signed document 94 and the electronic signature 96 are supplied preferably via a computer network 100 to an appropriate client 110.

By using the electronic document 94 and the electronic signature 96 supplied from user 90 to the client 110, the latter can carry out three client activities 105:
- If the public key 80 of the user 90 is already known, by means of this the electronic signature 96 is decoded, and then a hash is generated of the electronic document 94, and the two hashes are compared. If the two are identical, the document 94 is authentic.
- If the public key 80 of the user 90 is not known, this can be requested from the certification service provider 75. After learning the public key 80, the method corresponds to the description above.
- If the public key 80 of the user 90 is not known, there is another option. The electronic document 94 and the electronic signature 96 can be sent to the certification service provider 75, with a request to issue an authenticity certificate. In this case the above steps are carried out by the service provider.

A user 90 can of course hand over the writing device 50 to another user 90. In this case, however, a new private key and new signature patterns must be loaded into the writing device 50. A new private key may only be downloaded by the certification service provider 75, and in this process the writing device 50 will appear again as a blank writing device 50.

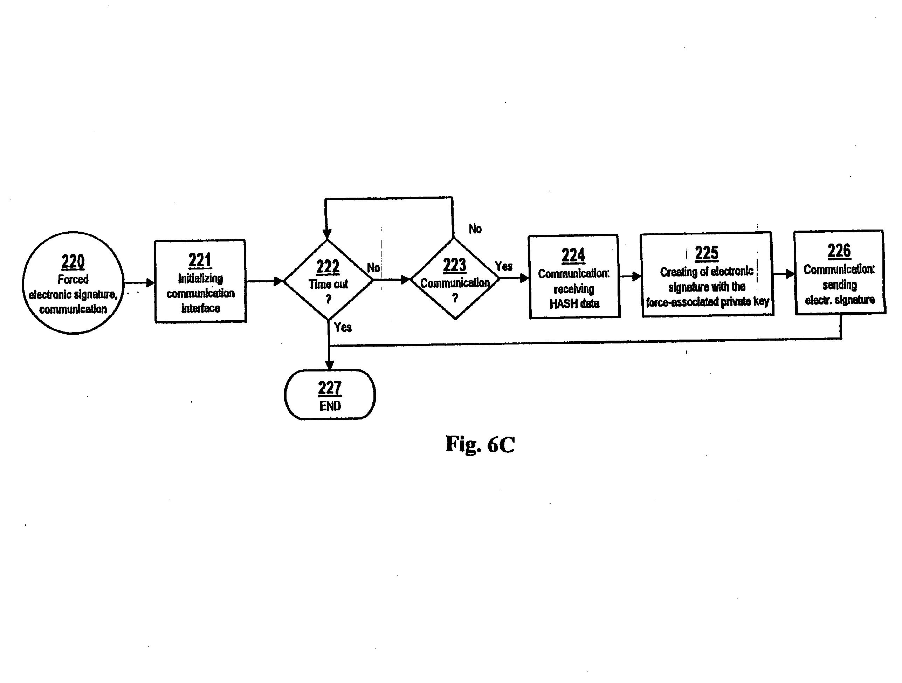

Figs. 6A, 68 and 6C depict three basic preferred algorithms of the electronic writing device.

Fig. 6A shows a signature digitalization 200 and stored signature pattern generating algorithm. As a result of this, a digitized stored signature pattern is created. In step 201 the digitizing of analog signals supplied to the multiplexer/digitizer unit 12 via the amplifier/signal conditioner unit 11 from the sensors S₁ ... Sₙ takes place, followed by a software implemented signal conditioning. From these digital values, the software running in the microprocessor 13 defines the characteristics of the signature in step 202, in a way known from per se. The characteristics so obtained represent the signature pattern, which is already suitable for digital storage and comparison. The validity of the signature can be indicated by using the pushbutton 17 of the writing device 50. In the case of a valid indication, the writing device 50 exits from the algorithm by step 206 after step 203, providing as a result the digitally stored signature pattern. If the signature has not been validated, a new signature can be written until the number of unsuccessful attempts is not higher than a certain pre-programmed number maxN. If the permitted number of attempts is exceeded, after step 204 in step 205 the software issues a sound signal and provisionally prohibits the use of the writing device 50, exiting from the algorithm.

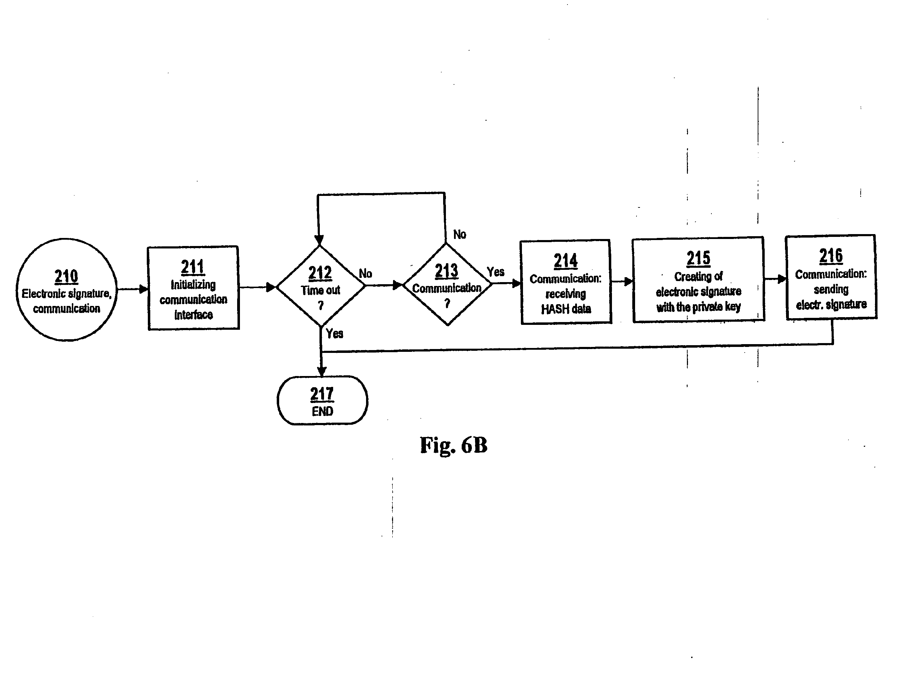

Fig. 6B shows an algorithm of electronic signature communication 210. As a first step 211, the initializing of the communication unit 30 is carried out. The actual steps depend on the type of communication unit 30. When the communication is triggered, a counter is started up, by which the algorithm monitors the commencing of communication in steps 212 and 213. If the starting of communication exceeds a certain pre-programmed time, the algorithm exits by issuing a sound signal and finishes its operation in step 217.

Once communication commences, the writing device 50 first reads the electronic hash 95 from the host system H in the step 214**,** followed by generating in step 215 the electronic signature 96 by means of the private key stored in the software. Once the electronic signature 96 is ready, the writing device 50 sends it to the host system H in step 216 and exits from the algorithm by issuing a sound signal.

Fig. 6C depicts the algorithm of a forced electronic signature communication 220. This communication is conducted in the case of detecting a force-associated signature. The algorithm is also started up by initializing the communication unit 30 in step 221, and then the process continues by waiting for the starting of the communication in steps 222 and 223. If the communication fails to commence, the program exits the algorithm in step 227. If the communication is started up, the writing device 50 receives the hash data from the host system H in step 224, and then - by means of a different private algorithm - a force-associated electronic signature 96 is generated in step 225. The electronic signature so generated is sent by the writing device 50 in step 226 to the host system H, and then the device exits from the algorithm by issuing a sound signal.

In the algorithms described above, of course the checks related to the maximum number of attempts and to the communication timeout are very important for avoiding the running of the software in an endless cycle.

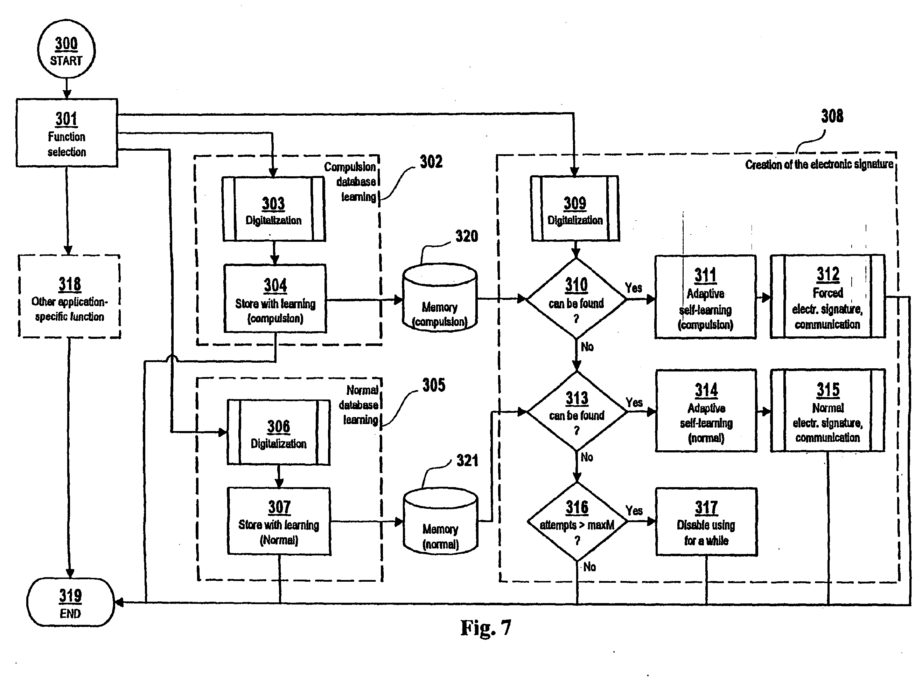

Fig. 7 shows the operation of the software of the electronic writing device 50.

The writing device 50 can be actuated by pushbutton 17. The unit first of all initializes itself in step 300, checks the status of memories and the communication unit 30 and then indicates the starting up of the software by a sound signal. Next, the selection of a function in step 301 offers four options:
- in step 305, a normal database learning;
- in step 302, a compulsion database learning;
- in step 308, the generating of an electronic signature; and furthermore
- in step 318, the implementation of other application-specific functions.

The function selection can be carried out most advantageously in a way that the command word of the function intended to be used, e.g. the word "SIGN." or "LEARN." is written by the writing device 50 in block letters. After the writing of the command word, the full stop at the end of the command could represent the command input, consequently it is not necessary to use the pushbutton when selecting the function.

If a normal database learning function is selected, a signature must be written by the writing device 50, which signature is digitized according to the digitalization 200 algorithm by the writing device 50 in step 306, generating a digital signature pattern. The so created signature pattern is stored in step 307 in a 'Normal' part 321 of the non-volatile memory 22. With the creation of the stored signature pattern, the activity is finished in step 319. Of course, a new normal database learning activity can be initiated. In order to ensure correct operations, the writing device 50 can preferably store several normal digital signature patterns simultaneously.

If a forced database learning function implemented in step 302 has been selected, a signature must be written again by writing device 50, but this time such a characteristic must be introduced into the signature which can be reproduced on the one hand, and which on the other properly distinguishes the signature made under compulsion from the normal one. It could be advisable e.g. to apply a dot, an accent or an underlining. The unit digitizes the signature in accordance with digitalization 200 algorithm in step 303, creating a digital signature pattern. The so created digital signature pattern is stored in step 304 in the 'Compulsion' part 320 of the non-volatile memory 22. Now this function has been completed and the operation comes to an end. Of course, a new forced database learning operation can be triggered. In order to ensure correct operation, the writing device 50 can preferably store several force-associated digital signature patterns simultaneously.

If a function of creating the electronic signature in step 308 has been selected, a signature must be put with writing device 50, which signature is digitized in accordance with the digitalization 200 algorithm in step 309, creating a detected signature pattern. This signature can be of the force-associated or of the normal type. The detected digital signature pattern is compared in step 310 by the software first with the signature pattern stored in the 'Compulsion' part 320 of the non-volatile memory 22. If the program determines a matching between the stored signature patterns and the detected signature pattern of the actually written signature, after an adaptive self-learning step implemented in step 311, a forced electronic signature communication 220 is carried out in step 312 and then the activities are finished.

Matching means that the detected signature pattern and a stored signature pattern are identical with a predetermined tolerance, as described for example in WO 98/12661.

If no matching is found by the program between the detected signature pattern and the signature pattern stored in the 'Compulsion' part 320 of the non-volatile memory 22, it is examined in step 313 whether there is correspondence with the signature patterns stored in the 'Normal' part 321 of the non-volatile memory 22. If a matching is found between the stored signature patterns and the detected signature pattern of the actually performed signature, after an adaptive self-learning step implemented in step 314, an electronic signature communication 210 is performed in step 315 and then the operation comes to an end.

If the program does not find a match between the detected signature pattern and the signature patterns stored in the 'Normal' part 321 of the non-volatile memory 22 either, it is examined in step 316 whether the number of consecutive unsuccessful attempts is above a pre-programmed number maxM. If so, a repeated use is temporarily inhibited in step 317. If not, the operation comes to an end, opening the opportunity for a new attempt.

Other application-specific functions implemented in step 318 primarily means an application in which for example - by means of the optical sensor S₁, the microprocessor 13 and the communication unit 30 - a hand-made drawing or a handwriting made by the writing device 50 can be transferred to the host system H.

The writing device 50 and method according to the invention enable a wide range of users
- to create an electronic signature in a simple way, identically with the series of movements needed to produce a conventional signature;
- to generate a safe electronic signature, because the electronic signature so generated is much better protected against copying than a conventional signature, because the electronic writing device performs a dynamic signature identification and the signature patterns are not supplied from and may not be read out of the writing device.

A further advantage is that the user - contrary to the chip card/PIN code system - cannot hand over his/her own identification means to others, even if he/she wanted to.

The advantage of the invention against other currently applied biometric identification methods is that a person eventually imposing a compulsion has a much more simple task when pressing the user's finger, palm etc. against a reader unit than making the user produce an authentic signature.

In summary, the electronic writing device according to the invention is an encoder unit that stores the user's private key and is activated by the user's live signature in order to generate the electronic signature.

It will be evident to those skilled in the art that the above disclosure is exemplary only and that various other alternatives, adaptations and modifications may be made within the scope of the present invention as defined by the following claims. For example, it is possible to use other types of sensors, central unit or communication unit than those described above.

Furthermore, by means of an enabling signal, it is not only the receiving of a hash which can be permitted, but also the creation of an electronic-signature or its forwarding or transferring to the host system.

In the writing device, according to the discussion above, several normal and force-associated signature patterns may be stored for comparison, when the comparison is carried out preferably for all the stored signature patterns.

## Claims

1. An electronic writing device for creating an electronic signature, the device comprising a sensor for producing an output signal by detecting a dynamic parameter of a signature, and means for calculating a detected signature pattern on the basis of the output signal of the sensor, comparing the detected signature pattern with a signature pattern stored in a memory and generating an enabling signal on the basis of the comparison, wherein the device also comprises a communication unit for implementing communication with a host system on the basis of the enabling signal, **characterized by** comprising
- a private key for the electronic signature (96) and means for generating the electronic signature (96) by means of the private key, wherein the communication unit (30) is capable of receiving a hash (95) produced from a document (94) in the host system (H) and supplying to the host system (H) the electronic signature (96) generated by means of the private key from the hash (95), and
- a force-associated signature pattern corresponding to a signature under compulsion and a force-associated private key for an electronic signature (96) implying compulsion, wherein the electronic signature (96) is generated by the force-associated private key when a force-associated signature pattern is detected,
wherein the stored signature pattern in the writing device (50) is adjusted by self-learning during use.

2. The writing device according to claim 1, **characterized in that** the means for calculating and comparing the detected signature pattern and generating the enabling signal, as well as the means for generating the electronic signature (96) are implemented in a microprocessor-based central unit (10), to which a non-volatile memory (22) is connected, the non-volatile memory (22) comprising the stored signature pattern, the force-associated signature pattern and the private key.

3. The writing device according to claim 2, **characterized in that** depending on the enabling signal, the communication unit (30) is instructed by the central unit (10) to receive the hash (95).

4. The writing device according to claim 2 or claim 3, **characterized in that** the central unit (10) and the non-volatile memory (22) have a design protected against read-out.

5. The writing device according to any of claims 2 to 4, **characterized by** comprising several types of sensors, preferably an optical sensor (S₁), a pressure sensor (S₂), an acceleration sensor (S₃) and/or a tilting sensor, and the detected signature pattern is calculated on the basis of the output signals of the sensors (S₁, S₂, ... Sₙ).

6. The writing device according to claim 5, **characterized in that** the sensors (S₁, S₂, ... Sₙ) are analog sensors, the output signals of which are supplied via an amplifier/signal conditioner unit (11) to a multiplexer/digitizer unit (12), the output of which is connected to the microprocessor (13) in the central unit **(10).**

7. The writing device according to any of claims 1 to 6, **characterized in that** the communication unit (30) has a cable, infrared or radiofrequency data transmission contact with the host system (H).

8. The writing device according to any of claims 1 to 7, **characterized by** comprising a conventional pen refill (52).

9. A method for generating an electronic signature by means of an electronic writing device, comprising the steps of detecting a dynamic parameter of a signature and on the basis of the detection calculating a detected signature pattern, comparing the detected signature pattern with a signature pattern stored in the writing device and producing an enabling signal on the basis of the result of the comparison, **characterized by**
generating a hash (95) in a host system (H) from a document (94) to be signed electronically
supplying the hash (95) to the writing device (50), the writing device (50) comprising a private key,
generating the electronic signature (96) by means of the private key in the writing device (50) from the hash (95), and
transferring the electronic signature (96) from the writing device (50) to the host system (H) for further processing,
wherein at least one of the supplying, generating or transferring steps is carried out depending on the enabling signal, and
wherein the writing device (50) further comprises a force-associated signature pattern corresponding to a signature under compulsion, and a force-associated private key associated with an electronic signature (96) implying compulsion, the electronic signature (96) being generated by the force-associated private key when the force-associated signature pattern is detected, and
wherein the stored signature pattern in the writing device (50) is adjusted by self-learning during use.

10. The method according to claim 9, **characterized by** enabling the supply of the hash (95) from the host system (H) to the writing device (50) by the enabling signal.

11. The method according to any of claims 9 to 10, **characterized in that** more than one sensor, preferably an optical sensor (S₁), a pressure sensor (S₂). an acceleration sensor (S₃) and/or a tilting sensor is applied, and the detected signature pattern is calculated on the basis of the output signals of the sensors (S₁, S₂, ... Sₙ).

12. The method according to any of claims 9 to 11, **characterized in that** the communication between the host system (H) and the writing device (50) is implemented by a cable, infrared or radiofrequency data transmission.

13. The method according to any of claims 9 to 12, **characterized by** using a writing device (50) comprising a conventional pen refill (52) and giving instructions to the writing device (50) by writing down the instructions, which writing is detected by the writing device (50) similarly to the detection of the signature.

## Patentansprüche

1. Elektronisches Schreibgerät zum Erzeugen einer elektronischen Signatur, wobei das Gerät einen Sensor zum Erzeugen eines Ausgabesignals durch Erfassen eines dynamischen Parameters einer Signatur und Mittel umfasst, zum Berechnen eines erfassten Signaturmusters auf Basis des Ausgabesignals des Sensors, zum Vergleichen des erfassten Signaturmusters mit einem Signaturmuster, das in einem Speicher gespeichert ist, und zum Erzeugen eines Freigabesignals auf Basis des Vergleichs, wobei das Gerät ferner eine Kommunikationseinheit zur Herstellung einer Kommunikation mit einem Host-System auf Basis des Freigabesignals umfasst, **gekennzeichnet durch**
- einen privaten Schlüssel für die elektronische Signatur (96) und Mittel zum Erzeugen der elektronischen Signatur (96) mittels des privaten Schlüssels,
wobei die Kommunikationseinheit (30) dazu geeignet ist, einen Hash (95) zu empfangen, der von einem Dokument (94) in dem Host-System (H) erzeugt wurde, und die elektronische Signatur (96) dem Host-System (H) zuzuführen, die mittels des privaten Schlüssels aus dem Hash (95) erzeugt wurde, und
- ein druckzugeordnetes Signaturmuster entsprechend einer Signatur unter Zwang und einem druckzugeordneten privaten Schlüssel für eine elektronische Signatur (96), die Zwang impliziert, wobei die elektronische Signatur (96) von dem druckzugeordneten privaten Schlüssel erzeugt wird, wenn ein druckzugeordnetes Signaturmuster erfasst wird,
wobei das gespeicherte Signaturmuster in dem Schreibgerät (50) während der Benutzung **durch** Selbstlernen angepasst wird.

2. Schreibgerät nach Anspruch 1, **dadurch gekennzeichnet, dass** das Mittel zum Berechnen und Vergleichen des erfassten Signaturmusters und zum Erzeugen des Freigabesignals ebenso wie das Mittel zum Erzeugen der elektronischen Signatur (96) In einer Mikroprozessor-basierten Zentraleinheit (10) realisiert sind, an die ein nicht-flüchtiger Speicher (22) angeschlossen ist, wobei der nicht-flüchtige Speicher (22) das gespeicherte Signaturmuster, das druckzugeordnete Signaturmuster und den privaten Schlüssel umfasst.

3. Schreibgerät nach Anspruch 2, **dadurch gekennzeichnet, dass** in Abhängigkeit von dem Freigabesignal die Kommunikationseinheit (30) von der Zentraleinheit (10) instruiert wird, den Hash (95) zu empfangen.

4. Schreibgerät nach Anspruch 2 oder 3, **dadurch gekennzeichnet, dass** die Zentraleinheit (10) und der nicht-flüchtige Speicher (22) einen Aufbau aufweisen, der gegen ein Auslesen geschützt ist.

5. Schrelbgerät nach einem der Ansprüche 2 bis 4, **dadurch gekennzeichnet, dass** es verschiedene Arten von Sensoren aufweist, vorzugsweise einen optischen Sensor (S₁), einen Drucksensor (S₂), einen Beschleunigungssensor (S₃) und/oder einen Neigesensor, und **dadurch**, dass das erfasste Signaturmuster auf Basis der Ausgabesignale der Sensoren (S₁, S₂, ... Sₙ) berechnet wird.

6. Schreibgerät nach Anspruch 5, **dadurch gekennzeichnet, dass** die Sensoren (S₁, S₂ ... Sₙ) analoge Sensoren sind, wobei deren Ausgangssignale über eine Verstärker-/Signalumsetzer-Einheit (11) einer Multiplexer-/Digitalisierer-Einheit (12) zugeführt werden, deren Ausgabe mit dem Mikroprozessor (13) in der Zentraleinheit (10) verbunden ist.

7. Schreibgerät nach einem der Ansprüche 1 bis 6, **dadurch gekennzeichnet, dass** die Kommunikationseinheit (30) einen Kabel-, Infrarot- oder Radio-Datenübermittlungskontakt mit dem Host-System (H) besitzt.

8. Schreibgerät nach einem der Ansprüche 1 bis 7, **dadurch gekennzeichnet, dass** es eine herkömmliche Kugelschrelbermine (52) aufweist.

9. Verfahren zum Erzeugen einer elektronischen Signatur mittels eines elektronischen Schreibgerätes, mit den Schritten des Erfassens eines dynamischen Parameters einer Signatur und Berechnen eines erfassten Signaturmusters auf Basis der Erfassung, Vergleichen des erfassten Signaturmusters mit einem Signaturmuster, dass in dem Schreibgerät gespeichert ist, und Erzeugen eines Freigabesignals auf Basis des Ergebnisses des Vergleichs, **gekennzeichnet durch**
Erzeugen eines Hashs (95) In einem Host-System (H) von einem Dokument (94), das elektronisch unterzeichnet werden soll,
Zuführen des Hashs (95) zu dem Schreibgerät (50), wobei das Schreibgerät (50) einen privaten Schlüssel aufweist,
Erzeugen der elektronischen Signatur (96) mittels des privaten Schlüssels In dem Schreibgerät (50) aus dem Hash (95), und
Übertragen der elektronischen Signatur (96) von dem Schreibgerät (50) zu dem Host-System (H) zur weiteren Verarbeitung,
wobei wenigstens einer der Schritte des Zuführens, Erzeugens oder Übertragens in Abhängigkeit von dem Freigabesignal ausgeführt wird, und
wobei das Schreibgerät (50) ferner ein druckzugeordnetes Signaturmuster entsprechend einer Signatur unter Zwang und einen druckzugeordneten privaten Schlüssel, der einer elektronischen Signatur (96) zugeordnet ist, die Zwang impliziert, aufweist, wobei die elektronische Signatur (96) von dem druckzugeordneten privaten Schlüssel erzeugt wird, wenn das druckzugeordnete Signaturmuster erfasst wird, und
wobei das gespeicherte Signaturmuster in dem Schreibgerät (50) während der Benutzung **durch** Selbstlernen angepasst wird.

10. Verfahren nach Anspruch 9, **gekennzeichnet durch** Freigeben des Zuführens des Hashs (95) von dem Host-System (H) zu dem Schreibgerät (50) durch das Freigabesignal.

11. Verfahren nach einem der Ansprüche 9 bis 10, **dadurch gekennzeichnet, dass** mehr als ein Sensor, vorzugsweise ein optischer Sensor (S₁), ein Drucksensor (S₂), ein Beschleunigungssensor (S₃) und/oder ein Neigesensor, eingesetzt wird, und **dadurch**, dass das erfasste Signaturmuster auf Basis der Ausgabesignale der Sensoren (S₁, S₂, ... Sₙ) berechnet wird.

12. Verfahren nach einem der Ansprüche 9 bis 11, **dadurch gekennzeichnet, dass** die Kommunikation zwischen dem Host-System (H) und dem Schreibgerät (50) durch eine Kabel-, infrarot- oder Radio-Datenübermittlung realisiert wird.

13. Verfahren nach einem der Ansprüche 9 bis 12, **gekennzeichnet durch** Verwenden eines Schreibgeräts (50) mit einer herkömmlichen Kugelschreibermine (52) und **durch** Geben von Anweisungen an das Schreibgerät (50) **durch** Niederschreiben der Anweisungen, wobei das Schreiben von dem Schreibgerät (50) in ähnlicher Weise zu der Erfassung der Signatur erfasst wird.

## Revendications

1. Dispositif électronique d'écriture pour créer une signature électronique, le dispositif comprenant un capteur pour produire un signal de sortie en détectant un paramètre dynamique d'une signature, et un moyen pour calculer un profil de signature détecté sur la base du signal de sortie du capteur, comparer le profil de signature détecté avec un profil de signature stocké dans une mémoire et générer un signal d'autorisation sur la base de la comparaison, dans lequel le dispositif comprend également une unité de communication pour établir une communication avec un système hôte en se basant sur le signal d'autorisation, **caractérisé en ce qu'**il comprend:
- une clé privée pour la signature électronique (96) et un moyen pour générer la signature électronique (96) à l'aide de la clé privée, dans lequel l'unité de communication (30) est capable de recevoir une fonction de hachage (95) produite à partir d'un document (94) dans le système hôte (H) et de fournir au système hôte (H) la signature électronique (96) générée à l'aide de la clé privée à partir de la fonction de hachage (95), et
- un profil de signature associé à une force correspondant à une signature sous compulsion et une clé privée associée à une force pour une signature électronique (96) impliquant une compulsion, dans lequel la signature électronique (96) est générée par la clé privée associée à une force lorsqu'un profil de signature associé à une force est détecté,
dans lequel le profil de signature stocké dans le dispositif d'écriture (50) est ajusté par auto-apprentissage en cours d'utilisation.

2. Dispositif d'écriture selon la revendication 1, **caractérisé en ce que** le moyen prévu pour calculer et comparer le profil de signature détecté et générer le signal d'autorisation, ainsi que le moyen prévu pour générer la signature électronique (96) sont mis en oeuvre dans une unité centrale (10) basée sur un microprocesseur, à laquelle est connectée une mémoire rémanente (22), la mémoire rémanente (22) comprenant le profil de signature stocké, le profil de signature associé à une force et la clé privée.

3. Dispositif d'écriture selon la revendication 2, **caractérisé en ce que**, en fonction du signal d'autorisation, l'unité de communication (30) est instruite par l'unité centrale (10) de recevoir la fonction de hachage (95).

4. Dispositif d'écriture selon la revendication 2 ou la revendication 3, **caractérisé en ce que** l'unité centrale (10) et la mémoire rémanente (22) ont un modèle protégé contre la lecture.

5. Dispositif d'écriture selon l'une quelconque des revendications 2 à 4, **caractérisé en ce qu'**il comprend plusieurs types de capteurs, de préférence un capteur optique (S₁), un capteur de pression (S₂), un capteur d'accélération (S₃) et/ou un capteur d'inclinaison et le profil de signature détecté est calculé sur la base des signaux de sortie des capteurs (S₁, S₂, ..., Sₙ).

6. Dispositif d'écriture selon la revendication 5, **caractérisé en ce que** les capteurs (S₁, S₂, ..., Sₙ) sont des capteurs analogiques, dont les signaux de sortie sont fournis par une unité d'amplificateur/conditionneur de signal (11) à une unité de multiplexeur/numériseur (12), dont la sortie est connectée au microprocesseur (13) de l'unité centrale (10).

7. Dispositif d'écriture selon l'une quelconque des revendications 1 à 6, **caractérisé en ce que** l'unité de communication (30) a un contact de transmission de données par câble, infrarouge ou radiofréquence avec le système hôte H.

8. Dispositif d'écriture selon l'une quelconque des revendications 1 à 7, **caractérisé en ce qu'**il comprend une recharge de stylo classique (52).

9. Procédé pour générer une signature électronique à l'aide d'un dispositif d'écriture électronique, comprenant les étapes de détection d'un paramètre dynamique et, sur la base de la détection, de calcul d'un profil de signature détecté, de comparaison du profil de signature détecté avec un profil de signature stocké dans le dispositif d'écriture et de production d'un signal d'autorisation en se basant sur le résultat de la comparaison, **caractérisé par**
la génération d'une fonction de hachage (95) dans un système hôte (H) à partir d'un document (94) à signer électroniquement,
la fourniture de la fonction de hachage (95) au dispositif d'écriture (50), le dispositif d'écriture (50) comprenant une clé privée,
la génération de la signature électronique (96) à l'aide de la clé privée dans le dispositif d'écriture (50) à partir de la fonction de hachage (95), et
le transfert de la signature électronique (96) du dispositif d'écriture (50) au système hôte (H) pour un autre traitement,
dans lequel au moins l'une des étapes de fourniture, de génération ou de transfert est effectuée en fonction du signal d'autorisation, et
dans lequel le dispositif d'écriture (50) comprend en outre un profil de signature associé à une force correspondant à une signature sous compulsion, et une clé privée associée à une force associée à une signature électronique (96) impliquant une compulsion, la signature électronique (96) étant générée par la clé privée associée à une force lorsque le profil de signature associé à une force est détecté, et
dans lequel le profil de signature stocké dans le dispositif d'écriture (50) est ajusté par auto-apprentissage en cours d'utilisation.

10. Procédé selon la revendication 9, **caractérisé par** l'autorisation de la fourniture de la fonction de hachage (95) du système hôte (H) au dispositif d'écriture (50) par le signal d'autorisation.

11. Procédé selon l'une quelconque des revendications 9 à 10, **caractérisé en ce qu'**on applique plus d'un capteur, de préférence un capteur optique (S₁), un capteur de pression (S₂), un capteur d'accélération (S₃) et/ou un capteur d'inclinaison, et le profil de signature détecté est calculé en se basant sur les signaux de sortie des capteurs (S₁, S₂, ... , Sₙ).

12. Procédé selon l'une quelconque des revendications 9 à 11, **caractérisé en ce que** la communication entre le système hôte (H) et le dispositif d'écriture (50) est assuré par une transmission de données par câble, infrarouge ou radiofréquence.

13. Procédé selon l'une quelconque des revendications 9 à 12, **caractérisé par** l'utilisation d'un dispositif d'écriture (50) comprenant une recharge de stylo classique (52) et donnant des instructions au dispositif d'écriture (50) en écrivant les instructions, laquelle écriture est détectée par le dispositif d'écriture (50) de la même manière que pour la détection de la signature.
